# EUROPEAN PATENT APPLICATION

(11) **EP 3 171 306 A1**
(43) Date of publication of application: **24.05.2017**
(21) Application number: 16002437.8
(22) Date of filing: 16.11.2016
(51) Int. Cl.: G06Q 10/08

(54) **INTEGRATED AUTOMATIC RETAIL SYSTEM AND METHOD**

(30) Priority: 20.11.2015 US 201514947848
(71) Applicant: The Answer Group, Inc., Bellrose, NY 11426 (US)
(72) Inventor: MURN, Thomas, Farmingdale, NY 11735 (US)
(74) Representative: v. Bezold & Partner Patentanwälte - PartG mbB

(57) **Abstract**

An automatic retail system including a server executing an inventory management application, a weight sensitive pallet sending a report to the inventory management application upon removal of an item from the weight sensitive pallet; a weight sensitive shelving system receiving items removed from the pallet and for storing the items, the weight sensitive shelving sending a report to the inventory management application upon receipt or removal of an item; and an automatic retail device sensing the removal of an item. The automatic retail device includes a camera and a display presenting one or more media presentations. The automatic retail device sends a report to the inventory management application upon completion of a sale of the item.

## Description

### Background

### 1. Technical Field

The present disclosure is directed to an integrated system and method for automatic retail sale of products to customers. In particular the present system and method integrates inventory, sale, point of sale processing, security, and digital media into a unified solution.

### 2. Discussion of Related Art

Currently there exist in the market a number of automated vending devices and systems which can automatically detect when a product has been removed from a shelf. Some of these systems utilize motion sensors, others utilize infrared scanning technologies, and still others utilize RFID technology or weight sensors or a combination of these. One such device has been developed by and is currently marketed under the trademark SHELFX^{®} by ShelfX, Inc.

These systems enable a purchaser to utilize their smartphones via an app, credit cards, or another dedicated access device such as a value refillable RFID card associated with the customer to unlock the door of the vending device. By using such means to limit entry, the system has already identified a purchaser and an account to be debited even before the door is open.

When the purchaser removes an item from a shelf, because either the location of items on shelves are known, the item's weights are known, or an item's RFID chip is read, the cost of the item can be displayed to the user along with a statement that their account will be debited a certain amount upon closure of the door. This occurs whether a single item or all items on the shelves are removed.

Upon closure of the door, the lock reengages and the transaction is finalized, resulting in the processing of the payment by debiting the account of the purchaser who opened the door. The purchaser may be notified of the completion of the transaction via email, text message, in app alert or by reviewing their account at a web page set up for such purposes.

The owner of the vending device will also receive some notification as to the purchase. The result is an inventory system which keeps accurate up-to-date records of all available items on the shelves of a particular automated vending device. When the number of a particular item reaches a certain level, the owner knows that re-stocking is necessary. Current systems enable an employee to utilize their access device and enter the vending device to restock the shelves. By detecting the items placed on the shelves, the inventory information can be updated. Analytics are also available to the owner to determine which products move off of the shelves, and what the timing of that movement is as well as other aspects of the purchase.

Similarly, there are a number of point-of-sale (POS) systems which are available to store owners to receive payment for sale of goods. These systems are typically networked and enable not just the collection of credit card and other payment information, but also the collection of trend, interest, and other data about the habits of the person doing the purchasing. One of the leaders in this space is the CLOVER^{®} system currently offered by First Data. By utilizing the data collected via the POS terminals and related data sources such as that from financial institutions, data about the purchaser can be collected and made available for a variety of data mining activities.

While currently these systems are quite effective and are market leaders in their respective industries, they are not currently integrated into a complete automatic retail system. The present disclosure is directed at providing such a solution.

### Summary

One aspect of the present disclosure is directed to an automatic retail system including an inventory management application running on a server, a weight sensitive pallet sending a report to the inventory management application upon removal of an item from the weight sensitive pallet, a weight sensitive shelving system receiving items removed from the pallet and for storing the items, the weight sensitive shelving sending a report to the inventory management application upon receipt or removal of an item, and an automatic retail device receiving items from the shelving system. The automatic retail device senses the removal of items. The system further includes a camera associated with the automatic retail device, a display presenting one or more media presentations, and the automatic retail device sends a report to the inventory management application upon completion of a sale of the item. According to a further aspect of the disclosure, the system further includes an authorization code reader, where an authorization code must be read before accessing one or more of the weight sensitive pallet, the weight sensitive shelves, or the automatic retail device. In some aspects of the disclosure the authorization code identifies the presenter as a customer with an account for the purchase of goods. Alternatively or additionally the authorization code may identify the presenter as an employee authorized to perform inventory management tasks.

The system may include a database storing the one or more media presentations and detailed information about a presenter of an authorization code. The system may present a predetermined media to the presenter of the authorization code upon gaining access to the automatic retail device. The predetermined media may be presented upon selection of an item stored in the automatic retail device.

According to one aspect of the disclosure the identity of the item is determined by one or more of movement detectors, an RFID code reader, or weight sensitive shelving in the automatic retail device. Further, the location of items in the automatic retail device may be stored in the memory of the automatic retail device such that removal of an item can identify the item selected. According to a further aspect of the present disclosure the system includes a software application dynamically generating media for presentation on the display. The software application may compare information about the presenter of the authorization code to the items available in the automatic retail device or the purchasing history of the presenter. The dynamically generated media may be an enticement to try an alternative product from that typically purchased by the presenter. The dynamically generated media may include a customer loyalty incentive from a manufacturer. The dynamically generated media may include a customer loyalty incentive from an operator of the automatic retail device. The software application may store in the database an entry associated with the presenter of the authorization code regarding the media displayed and the identity of a purchased item.

According to a further aspect of the present disclosure, the database includes an image of the presenter of the authorization code. The system may include a software application which upon permitting access to an automatic retail device queries the database as to whether an image of the presenter is stored therein and if no image is stored, the software application instructs the camera to capture an image of the presenter of the authorization code. Further, where there is an image the software application is configured to perform an image analysis to identify one or more relevant information regarding the presenter.

Embodiment statements/summary statements:
The present disclosure further comprises the following aspects:
   According to a first aspect, an automatic retail system is provided comprising:
      a server executing an inventory management application; a weight sensitive pallet sending a report to the inventory management application upon removal of an item from the weight sensitive pallet;
      a weight sensitive shelving system receiving items removed from the pallet and for storing the items, the weight sensitive shelving sending a report to the inventory management application upon receipt or removal of an item; an automatic retail device receiving items from the shelving system, the automatic retail device sensing the removal of an item; a camera associated with the automatic retail device; a display presenting one or more media presentations; wherein the automatic retail device sends a report to the inventory management application upon completion of a sale of the item.

According to a second aspect, the system according to the first aspect, is provided further comprising an authorization code reader, wherein an authorization code must be read before accessing one or more of the weight sensitive pallet, the weight sensitive shelves, or the automatic retail device.

According to a third aspect, the system according to the second aspect, is provided wherein the authorization code identifies the presenter as a customer with an account for the purchase of goods.

According to a fourth aspect, the system according to the second aspect, is provided wherein the authorization code identifies the presenter as an employee authorized to perform inventory management tasks.

According to a fifth aspect, the system according to the second aspect, is provided further comprising a database storing the one or more media presentations.

According to a sixth aspect, the system according to the fifth aspect, is provided further comprising a database storing detailed information about a presenter of an authorization code. According to a seventh aspect, the system according to the sixth aspect, is provided wherein the display presents a predetermined media to the presenter of the authorization code upon gaining access to the automatic retail device.

According to a eighth aspect, the system according to the sixth aspect, is provided wherein the display presents a predetermined media to the presenter of the authorization code upon selection of an item stored therein.

According to a ninth aspect, the system according to the eighth aspect, is provided wherein the identity of the item is determined by one or more of movement detectors, an RFID code reader, or weight sensitive shelving in the automatic retail device.

According to a tenth aspect, the system according to the ninth aspect, is provided wherein the location of items in the automatic retail device is stored in the memory of the automatic retail device such that removal of an item can identify the item selected.

According to a eleventh aspect, the system according to the sixth aspect, is provided further comprising a software application dynamically generating media for presentation on the display.

According to a twelfth aspect, the system according to the eleventh aspect, is provided wherein the software application compares information about the presenter of the authorization code to the items available in the automatic retail device or the purchasing history of the presenter.

According to a thirteenth aspect, the system according to the twelfth aspect, is provided wherein the dynamically generated media is an enticement to try an alternative product from that typically purchased by the presenter.

According to a fourteenth aspect, the system according to the twelfth aspect, is provided wherein the dynamically generated media includes a customer loyalty incentive from a manufacturer.

According to a fifteenth aspect, the system according to the twelfth aspect, is provided wherein the dynamically generated media includes a customer loyalty incentive from an operator of the automatic retail device.

According to a sixteenth aspect, the system according to the eleventh aspect, is provided wherein the software application stores in the database an entry associated with the presenter of the authorization code regarding the media displayed and the identity of a purchased item.

According to a seventeenth aspect, the system according to the sixth aspect, is provided wherein the database includes an image of the presenter of the authorization code.

According to a eighteenth aspect, the system according to the seventeenth aspect, is provided further comprising a software application which upon permitting access to an automatic retail device queries the database as to whether an image of the presenter is stored therein.

According to a nineteenth aspect, the system according to the eighteenth aspect, is provided wherein if no image is stored, the software application instructs the camera to capture an image of the presenter of the authorization code.

According to a twentieth aspect, the system according to the nineteenth aspect, is provided wherein the software application is configured to perform an image analysis to identify one or more relevant information regarding the presenter.

Further, to the extent consistent, any of the aspects described herein may be used in conjunction with any or all of the other aspects described herein.

### Brief Description of the Figures

Objects and features of the presently disclosed system and method will become apparent to those of ordinary skill in the art when descriptions of various embodiments thereof are read with reference to the accompanying drawings, of which:
Fig. 1 depicts a schematic view of an automatic retail system according to the present disclosure;
Fig. 2 depicts a variety of shapes and sizes of retail devices according to the present disclosure;
Fig. 3A depicts a detailed view of a retail device according to the present disclosure;
Fig. 3B depicts a second detailed view of a retail device according to the present disclosure;
Fig. 4 depicts a side view of a retail device according to the present disclosure;
Fig. 5 depicts a perspective view of a retail device according to the present disclosure;
Fig. 6 is a flow chart describing the purchase of a product according to aspects of the present disclosure; and
Fig. 7 is a flow chart describing an inventory management system according to the present disclosure.

### Detailed Description

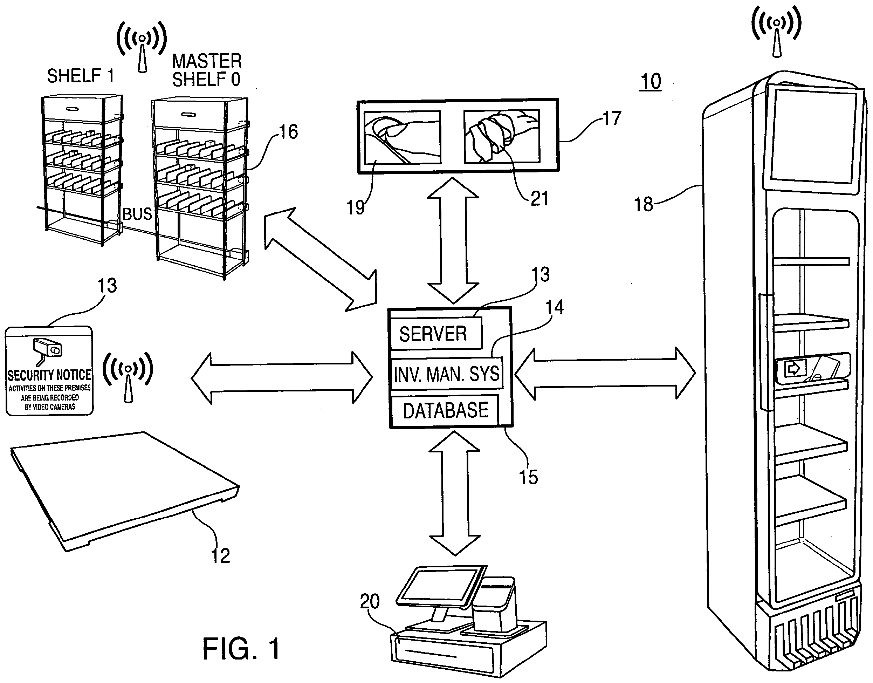

Fig. 1 depicts an automatic retail system 10 according to one aspect of the present disclosure. One of the biggest issues for the owner of a retail establishment, whether a mega-box store or an individual kiosk owner, is the theft of inventory. To address this issue the present disclosure begins with a smart pallet 12. The smart pallet 12 includes sensor technology similar to that found in the automated vending devices described above. As a result, when an item is removed from the smart pallet 12, its removal is detected and a report is generated by a processing unit in the smart pallet 12. The report is transmitted via, for example, Wi-Fi^{®} to an inventory management system 14, which is a software application running on server 13 and accessing database 15. The inventory management system 14 receives reports from every element of the system 10 to verify the propriety of any movement of an item of inventory. The inventory management system 14 reconciles these reports as items are moved through the system 10. Thus, if the item removed from the smart pallet 12 is placed on a smart shelving system 16, a second report is generated by a processing unit in the smart shelf which detected the placement of the item on the smart shelf 16. By reconciling the two reports, the inventory management system 14 is able to in-process items delivered from a warehouse to a retail establishment on smart pallets 14 and placed in the smart shelves 16, and have confidence that the received items have all been accounted for following receipt and that none have "fallen off the back of the truck."

Likewise, if an item is taken off of a smart shelf 16 a report is generated and it can be reconciled with reports generated by automatic retail devices 18 of items placed on its shelves. At this point, the next movement of the item from the shelf in the automatic retail device 18 and closure of the door should result in the sale of that item to a purchaser, as described above. Again, a report is generated, this time by either the processing unit associated with the automatic retail device 18, or in some instances by a separate POS terminal 20, associating the purchase of an item with a particular purchaser. As described above, the purchase results in a debit attributed to the account of the purchaser. Also that particular instance of the item is now completely removed from inventory and moved to the products sold portion of the inventory management system 14. Further, a quantity can be added to a quantity sold metric which may be compared to a pre-determined quantity in order to initiate automatic reordering of the item. This can result in more streamlined inbound inventory management, help reduce the amount of a product that must be stored in the retail location, and ensure that adequate supplies are enroot should stock on-hand be reduced.

At each step of the process described above, only certain individuals are authorized to act to move products from location to location. For example a hierarchy of entry rights may be provided to employees with certain employees having the rights to move products from the smart pallet 12 to the smart shelves 16 and others having the rights to stock the automatic retail device 18. As a result, if there are discrepancies, these can be attributed to specific individuals or groups of individuals and closer control can be had of the items as they proceed through the system.

One method of signifying that an individual is authorized can be described with reference to employee tracking system 17. Employee tracking system 17 requires that an employee first enter some identifying password, such as a biometric password (e.g., a fingerprint scan) or other identification that cannot be easily forged at a terminal 19. Upon identifying the individual presenting the identification, a tracking device 21 can be issued to the individual. Based on the individual's permissions, the tracking device 21 may authorize the individual to enter certain storage locations, but not others as desired by the owner or manager of system 10. As depicted in Fig. 1, the tracking device 21 is a wristband including an RFID transponder which communicates with the system 10. Whenever the tracking device 21 is within range of one or more of the smart pallet 12, smart shelves 16 or automatic retail device 18, the tracking device is read, and associated with any items they may remove from the smart pallet 12, the smart shelves 16, or automatic retail device 18. In this manner, an individual's movements can be associated with the movement of items as they are transported through the system 10 from smart pallet 12 to smart shelf 16 to automatic retail device 18. When an item is removed from, for example, the smart pallet 12, that movement can be associated with the individual bearing the tracking device 21 that is in closest proximity to the smart pallet 12. As a result the employee bearing tracking device 21 is associated with the movement of the item from the smart pallet 12. In the even there are multiple personnel in proximity to the smart pallet 12 at the time of the movement or there are multiple items being removed, multiple entries can be made for each individual and the identification of which employee moved which item can be resolved by tracking which employee placed which item on the smart shelves 16. In this manner, each movement of an item can be associated with an employee or authorized individual. This resolution occurs through the use of one or more software applications associated with the inventory management system 14 and the database 15. Each movement of an item can be recorded and stored in the database 15 and inventory of the system, its location, and any discrepancies can be readily identified and resolved.

A further aspect of the present disclosure is the camera 13, which can be associated with each of the smart pallet 12, smart shelves 16 and the automatic retail device 18. Whenever an item is removed from one of these locations, the camera can be initiated and one or more still or video images can be captured. As a result, each movement of an item can be associated with an image or video identifying the employee undertaking the movement. If a subsequent movement is not registered, for example, placement of the item on smart shelves 16, then the identity of the individual failing to complete the movement can be readily gleaned from the image or video. This information may be presented to an owner or manager of the system 10 so that appropriate investigation or corrective action can be undertaken. Such a system of associating specific images or video with a movement reduces the amount of video or number images an owner or manager of system 10 would have to review in order to identify an individual who improperly accessed the inventory and failed to place in properly in the system.

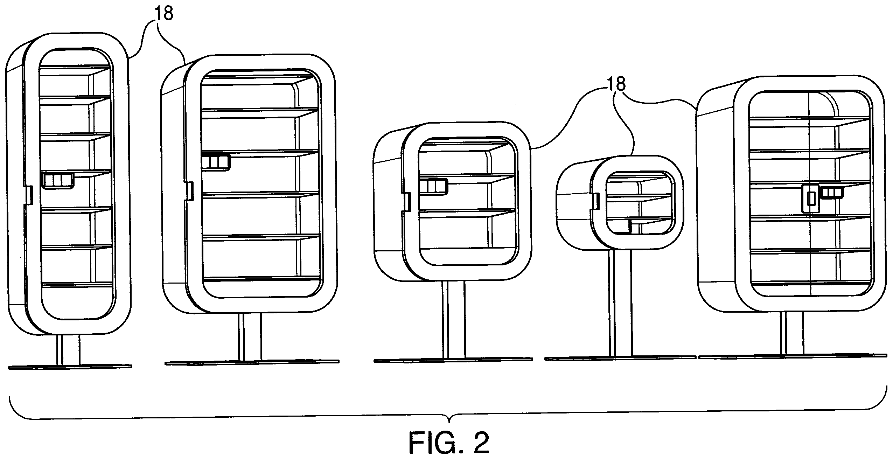

Fig. 2 depicts a variety of automatic retail devices 18. As will be appreciated by those of skill in the art any size, shape, and/or configuration may be utilized without departing from the scope of the present disclosure, and those depicted in Fig. 2 are merely examples. A further example of an automatic retail devicel8 can be found in pending U.S. Design patent application no. 29/534,413 the entire contents of which is incorporated herein by reference.

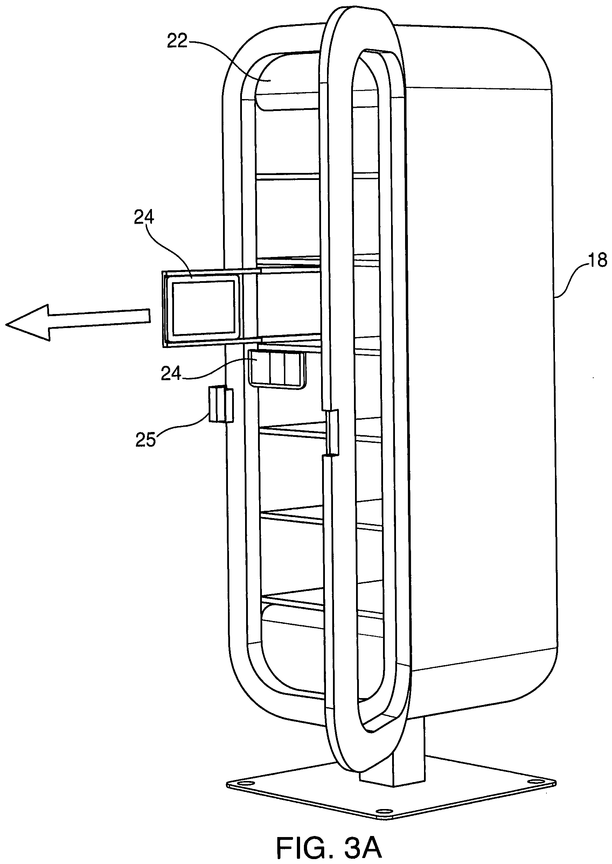

Fig. 3A depicts an automatic retail device and its features including a camera 22, two alternative types of display 24, and a card reader or access point 25. The camera 22 has a variety of functions. As an initial matter, the camera 22, much like that found at ATM's throughout the world can be used for security purposes allowing an owner of the retail system 10 to identify a person who might attempt to circumvent the purchase protocols (e.g. attempting to re-open a door before complete closure so that sales are attributed to another person). By use of the camera 22, if a party were to dispute charges on their account, the owner could review the camera footage at the time of the purchase and confirm whether the person associated with the account was indeed the purchaser, or whether it was another individual. Similarly, the owner could determine whether the person replaced the item. Indeed identifying individuals who replace items can provide valuable information regarding a products appeal, branding, and possible incentives or other data about the purchaser. Further, should items go missing, the use of the camera 22 will help to identify who within the group of authorized individuals is responsible for the movement of the missing items.

A further aspect of the camera 22 is the ability to capture additional facts about an individual purchaser that are not typically gathered in the process of starting a financial account such as a credit card, or captured at a POS terminal 20. These factors include information that can be very useful for advertisers or other individuals looking to identify and market products to specific people. As an example, the camera can capture generally the race of the individual making the purchase. The camera can also capture the age, sex, and other features of the person whose image was captured. In one example, the fact that an individual purchaser is bald could be very useful information to collect that would never be gathered by traditional data informatics systems which rely on financial institution data and purchasing habits to infer that a particular purchaser might be bald. When the information gleaned from the camera 22 is captured and associated with the data generated and captured by a POS terminal 20 and financial institutions regarding purchasing habits, timing of purchases, stores frequented, and types of purchases made, a variety of marketing mechanisms can be undertaken as will be described in greater detail below.

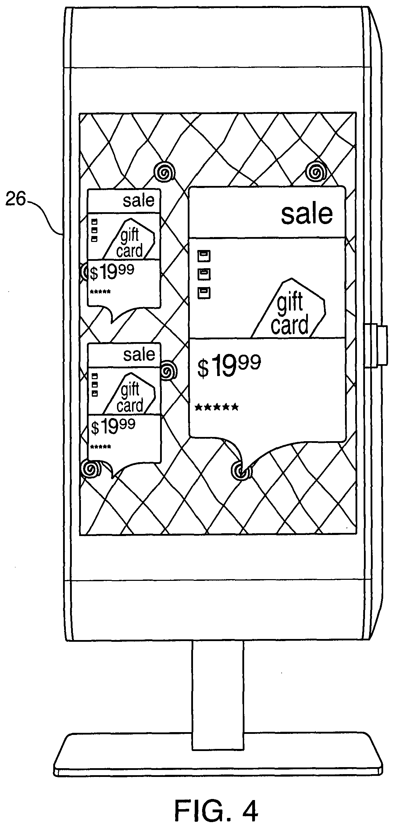

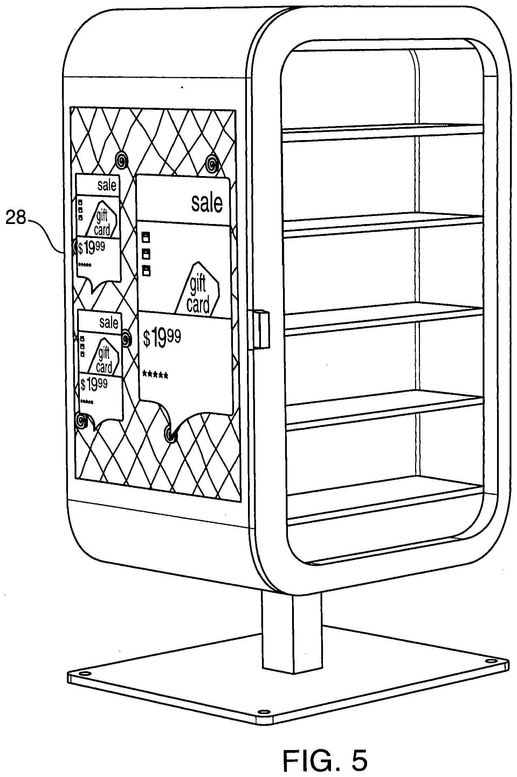

Another feature of the automatic retail device 18 is a display 24. This display 24 may be located in one or more of a variety of locations. For example the display 24 may be on the door 30 (Fig. 4) of the automatic retail device 18. Alternatively, the display may be built into the side 32 (Fig. 5) of the automatic retail device 18. Still further, the display 24 may be located inside of the automatic retail device 18, and may automatically extend out, or drop down such that a purchaser is presented with the display 24 upon opening the automatic retail device 18. The display may perform a variety of functions including presenting the purchaser with media about the product that they have selected. The display 24 is connected to a processor in the automatic retail device 18 and upon selection of an item, whose location on the shelves of the automatic retail device 18 have been pre-identified, the display 24 presents one or more pre-stored videos or other media presentations to the purchaser. These videos or media presentations may be as simple as a presentation of the current advertisement campaign, they may present nutritional facts to the purchaser, they may present endorsement information to the purchaser, or some other information that is relevant either to the product or the purchaser. The advertising campaign might include interactive games, syndicated content, or a variety of such features.

As described above, through the use of the camera 22, additional information about the user may be collected. This data may be utilized to present the user with very specific information relevant to that purchaser. As an example, if the purchaser is identified as being bald, and selects razors (a high theft item particularly benefitting from the security of the present disclosure) the display may provide the purchaser with a short video that identifies the selected product as being particularly well suited for shaving of the face, but if the purchaser is looking to shave their head an additional product would be a better option. Further, if the display 24 has touch screen capabilities or some other user-input facility, the display can ask the purchaser if they are interested in receiving a coupon or a rebate for the purchase of the additional product. This concept can be further refined where prior purchase information is queried to identify the additional product, the other type of razor, as one the purchaser has purchased in the past and indicate to the purchaser that it's been 3 months since their last purchase of that product and they likely need to resupply or might need to be reminded not to forget to purchase the other type of razor as well.

Still further options are available for incorporation into system 10. For example, because the purchaser likely has a financial account associated with their access device, the server 13 and an application associated with the database may identify the purchaser, consider past purchases made either at that location, that type of retail establishment, at that time of the day or a combination of these or other factors and utilize that information to present the purchaser with a coupon or an electronic gift card for the purchase of a product contained within the automatic retail device 18. This coupon or gift card may be for a product purchased in the past, (e.g., a loyalty reward) or a new but related product which based on the collected information is one that the purchaser is likely to consider purchasing.

As described above, access to the automatic retail device 18 is via an access point 25. The access point 25 may be a card reader, RFID transponder, an optical analysis device, a biometric reader (e.g., fingerprint analyzer/scanner) or a combination of such devices as would be known of ordinary skill in the relevant art. The access point 25 is used to gather information about the presenter of an authorization code, and to compare the authorization code to entries in the database 15 to determine whether an account exists for the authorization code.

In one method of operation the access point 25 is a combination card reader (e.g., a credit card reader) and biometric reader. In such a scenario, the first time an individual attempts to access an automatic retail device 18 the individual must present their credit card, which will unlock the automatic retail device 18. At this point the individual is presented with an option on the display 24 to allow their fingerprint to be scanned by the biometric reader portion of access point 25. If they so choose, the fingerprint of the individual can be read and associated with the individual's account. As a result, the next time the individual seeks to access the automatic retail device 18, they need merely allow their fingerprint to be scanned, and because it is associated with their account the individual is granted access without having to present their credit card or other access enabling technology (e.g., RFID, QR code, etc.).

Those of skill in the art will appreciate that the fingerprint information may be the type of information an individual does not want to be sent to a central database 15 where by transmission and storage operations it is potentially more susceptible to a data breach. Accordingly, in one embodiment instead of storing the fingerprint or other biometric data centrally, the data is stored locally on the automatic retail device 18 and subsequent use of the biometric data for access is limited to only those automatic retail devices 18 that the individual has allowed capture of the biometric data as described above. Similarly, by performing a card reading or other account access the individual can undertake steps to delete their biometric data from the automatic retail device 18. As will be appreciated, if desired the system may enable central storage of the biometric data enabling a single reading of the biometric data to allow access to system wide automatic retail devices.

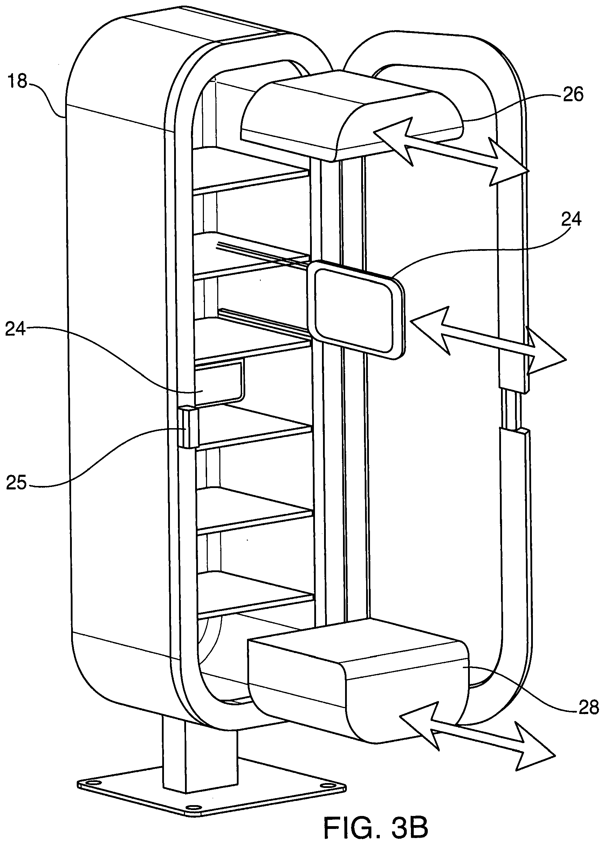

Fig. 3B depicts a modular view of the automatic retail device 18. As depicted in Fig. 3B, the automatic retail device 18 includes a display 24. Though two displays 24 are shown, practically only one is likely to be used commercially and the presentation of two here is largely to demonstrate that alternative arrangements are possible and contemplated within the present disclosure. The automatic retail device 18 includes an access point 25, as described above. Also depicted in Fig. 3B are the modular construction and removability concepts for the automatic retail device 18. For example, the computer 26 may be situated such that upon experiencing an error the computer can simply be slid out and replaced with a functional one. Similarly the refrigeration unit 28 may be easily swapped out by a technician should it experience problems. The refrigeration unit 28 may either be fully self-contained, or may include valves and plumbing (not shown) which will enable the pump down of or isolation of portions of the refrigeration system enabling a technician to replace defective components without necessarily exposing the entire system to the atmosphere.

Though described in the context of a single automatic retail device 18, the system 10 may in fact employ a plurality of such automatic retail devices 18. In such a scenario, the automatic retail devices 18 may result in an automatic retail establishment. The use of the automatic retail devices 18 avoids the need for the purchaser to wait in line at a check-out counter and may in fact simply allow the purchaser to leave the establishment upon obtaining the desired product(s). Rather than the purchaser's account being reconciled with the closure of a door mechanism, the purchaser's account can be reconciled upon simply leaving the establishment.

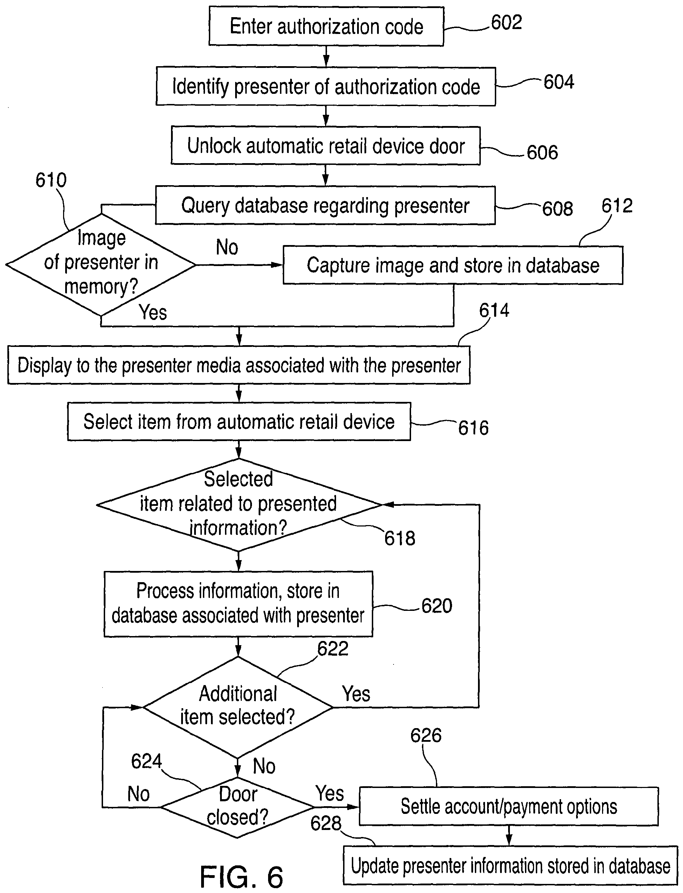

Fig. 6 provides an exemplary method of the present disclosure. The method depicted generally describes the purchase of an item by a user utilizing the automatic retail device 18 and the system 10 depicted in Fig. 1. In the method, at step 602 an authorization code is entered. This may be through the use of a private pin code, the use of an RFID enabled card, the scanning of a code such as a quick response (QR) code which may be read from a smart phone, or an in-app communication via a wireless or Bluetooth^{®} communication system or other methodologies known to those of skill in the art. Once the authorization code is received by for example a QR code scanner associated with the automatic retail device 18, the database 15 can be queried at step 604 to identify the presenter of the authorization code. Once the presenter is identified the door of the automatic retail device 18 can be unlocked at step 606. This step is of course optional, as the identification of the presenter may reveal a variety of data stored in the database, including for example an unpaid balance, an expired credential, that the credential is associated with one that is suspected of being spoofed or some other rationale for refusal to service the presenter of the authorization code.

At step 608 (which in some embodiments could be performed in conjunction with step 604) the database 15 is queried to identify other information about the presenter. This information could include nearly any item relevant to the habits, interests, or personality of the presenter of the authorization code. The database 15 will include buying habits, as well as personal information regarding sex, age, and if possible race, eye color, hair color, a gross determination of weight or apparent fitness, financial information which might be retrieved from a credit report or financial institutions associated with the presenter of the authorization code, etc. As described above, in order to determine some of these data a photograph of the presenter is one of the most expedient means to provide the information, even without requiring the presenter themselves to self-report the information. Accordingly, one of the queries of the database is to determine whether there is in the presenter's file a photograph at step 610. If there is a photograph on file the method advances to step 614, if not before advancing the method proceeds to step 612 where an image of the presenter is captured and transmitted to the server 13. The server 13 may include a data recognition software which can analyze the photograph to perform assessments such as identifying race, proximate age, proximate weight or fitness level, color of hair, color of eyes, whether the person is bald, etc. Once the software application has rendered the information, the information is stored in the database 15 and associated with the presenter of the authorization code. As will be appreciated this image may provide further security by preventing the use of an authorization code via image comparison of the presenter of the authorization code and the person standing before camera 22 attempting to access the automatic retail device 18. Such security may be associated with an alarm or other alerting mechanisms.

At step 614, the appropriate media data stored in the database 15 is displayed to the presenter of the authorization code as a result of the querying of the database 15. This may be in the form of predetermined media that is simply presented to the presenter of the authorization code such as an account balance, or a predetermined offer for services or discount (e.g., an automatic rebate for the purchase of a product based on customer loyalty to that product). This predetermined media may include advertisements either static or video which the product manufacturers have paid to be presented at a specific location, or to a specific category of purchaser, or based on the contents of the automatic retail device 18. Alternatively, the media may include interactive games where, in combination with advertisement, the presenter of the authorization code is asked a series of trivia questions with the enticement that they can receive some further discount upon completing the task. Alternatively, the media may be a simple news feed associated to the presenter's interests, such as the latest baseball scores for a known baseball fan (determined from purchasing habits) or stock market prices keyed. The stock market prices may be keyed to the products in the automatic retail device 18.

The possibilities of the media that can be displayed are nearly limitless, and while in one embodiment they are associated with the presenter of the authorization code, they may also be media that is displayed to all presenters. For example, if a number of such automatic retail devices 18 are located at a concert venue, the concert venue might pay for the right that upon each accessing of the automatic retail device 18 the coming attractions are announced to the presenter of the authorization code. This may be coupled with playing of the music of the artists, playing of music videos, and the option to purchase tickets through the automatic retail device 18. Again the presenting of the offer may be accompanied by an enticement such as waiving of a processing fee or a discount if purchased immediately.

A further possibility of the media which may be displayed is media related to the awarding of a prize. This prize can come in a variety of forms. In one example, random access codes are selected by a manufacturer for awarding a free product upon their next use of an automatic retail device 18. Alternatively, the entity operating the automatic retail device 18 may have its own awards and loyalty programs. As part of such programs a portion of an outstanding balance may be paid off, the purchase of a new product may be covered by the company, or other awards may be offered to the loyal customers. These may be stand alone or may be in conjunction with a points system such as that employed by the airlines and other industries.

Alternatively, the media being displayed can be dynamically identified based on not just the presenter of the authorization code, but also the time of day, the location of the automatic retail device 18, or even the specific contents of the automatic retail device 18. As an example, the presenter of the authorization code may have purchased yogurt of a particular brand regularly, however, the particular automatic retail device 18 might not have in its stock the same brand or the particular flavor the presenter has purchased in the past. By cross-referencing this information with information regarding the actual inventory of the specific automatic retail device 18 being accessed, a suggestion may be displayed to the presenter of the authorization code that they may be satisfied with an alternative brand that is carried in that specific automatic retail device 18. This of course may be associated with an enticement to make the purchase despite prior brand loyalty such as an immediate rebate on the purchase price, a two for one offer, or some other enticement.

Regardless of what media is displayed to the presenter of the authorization code, a product must be selected. If none is selected, the process stops at step 614 and the data regarding the failed transaction is stored in the database 15 for associating with the presenter. In some ways a failed purchase may reveal as much information about a customer as a successful one and the ability to analyze failed sales can help to further refine both media to be displayed to the user and other habits and relevant information.

Once an item is selected at step 616, which can be identified by movement sensors, weight sensors, RFID codes and others as described above, a comparison must be made to determine whether the selected item has any relation to the displayed media from step 614. Regardless of whether there is a relationship, processing and storing of information regarding the selection is performed in step 620. If there is a relationship between the selected item and the displayed media appropriate steps have to be taken to ensure any rebate or discount or other enticement is properly accounted for in the presenter's account.

As noted in step 620 information about the selected item is processed and recorded in the database. This data may reveal whether certain advertisements were effective (or not), whether certain types of enticements are effective (or not) for a particular person, and other inquiries. When sufficient such data is collected, broader assessments can be made regarding the effectiveness of certain displayed media with respect to its intended purpose as well as identifying groups of individuals on which a particular type of advertisement is most effective as well as those groups on which no advertisement is effective. Again either determination is useful as product manufacturers may be able to reduce cost by ensuring that they are not paying to advertise to those who simply will not be persuaded, and as importantly ensuring that their paid advertisement are presented to those who have the highest likelihood of acting on them.

From the entity running the automatic retail device 18, the ability to refine the data and ensure to potential manufacturers whose products might be sold through an automatic retail device 18 that their advertisements and enticements will only be presented to those most likely to act on them can lead to premium pricing for that advertisement. Further, this can help with customer loyalty by not bombarding certain individuals with unwanted or annoying advertisement which is not relevant to their purchasing habits. As will be appreciated further refinement of what, where, and to whom a particular media will be displayed to a presenter of an authorization code can be undertaken as is known in the marketing and sales arts in order to maximize the presentation to the most receptive individuals and to properly set the pricing of the display of a particular media. For example, a manufacturer who simply wants a piece of media to be widely disseminated regardless of effectiveness may be able to negotiate a lower price per presentation due to the volume. In contrast, a manufacturer who only wants to present media to those most likely to act on that media may have to pay a premium despite being viewed by fewer individuals.

As will be appreciated by those of skill in the art, once media is being displayed to a user, there is an opportunity to charge the manufacturer for the right to present this media through the display 24 of the automatic retail device. One common metric used in the internet advertising and media presentation area is pay per click (PPC). In PPC programs the advertisers will pay Internet Publishers the agreed upon PPC rate when an ad is clicked on, regardless if a sale is made or not. In the system of the present disclosure, advertisers could be charged upon several actions. The first is opening of the automatic retail device 18, which causes one form of media to be presented. A second is upon selection of an item, at which point a more specific form of media, as described herein above, may be presented to the purchaser. Further, there is the opportunity to charge for the presentation of additional media on displays 30 and 32 on the exterior of the automatic retail device. The displays 30 and 32 may present static images, video images, or be replaceable print media as used in many billboard type applications. Because of the high refinement of the nature of the individuals selecting a product, the cost of presenting media to an individual after selection of a product may be set at a fixed rate (analogous to cost-per-click (CPC)) concepts known in the advertising art. Further the costs of advertising at a specific location of an automatic retail device 18 for a specific product or a general media presentation can be set via a bidding process amongst the manufacturers of the products being sold, advertisers generally, and competitors. Other methods of generating revenue from the placement of advertisements as the media presentations will be known to those of skill in the art and are considered within the scope of the present disclosure. The processing of step 620 may continue at the server 13 after receipt of the data regarding the selected item. Once the data is transmitted to the server 13, an inquiry is made in step 622 as to whether additional items have been selected. If yes, steps 618 and 620 can be repeated until no further items have been selected in step 622 and the method can proceed to step 624 to determine whether the door has been closed.

It should be noted in conjunction with steps 614 and 616, the order of operations may be reversed and step 618 may be eliminated. Such a scenario enables the display of media to the presenter of the authorization code which also takes into account the actual product selected. As a result following selection of an item, the media being displayed may present some fact about that product or may present a rebate of coupon for that item to the user. Step 620 is still performed such that accurate records of the presenter's purchasing habits, the enticements accepted and other information can be recorded in the database 15 for future use as described above.

If the door is not closed, the method returns to step 622 to determine if an additional item will be selected. This loop may be associated with a timing provision which will alert management that the door has been left ajar, and may take steps to prevent someone from removing items while the costs of those items are associated with a previous user. As will be appreciated by those of skill in the art automatic closure mechanisms associated with the doors of the automatic retail device 18 help ensure that such an event does not occur.

Once the door is sensed as closed in step 624 the method proceeds to an account settlement and payment resolution step 626. Because in most instances the presenter of the authorization code will have a preexisting account, this step may be as simple as ensuring that the appropriate debits are associated with that account for final resolution with the user's credit card company or an invoicing system at the appropriately scheduled timing.

In some instances as described above, the automatic retail device 18 may be one of many such devices located in an automatic retail establishment. Such establishments may include a system in which upon entry a user is provided a single use authorization code (e.g., an RFID card). The RFID card grants the presenter access to each of the automatic retail devices 18. Further, the RFID card may receive from each automatic retail device 18 an accounting of each item the user removes from the automatic retail devices 18. Alternatively, this information may be transmitted automatically to the POS terminal 20 via a wired or wireless communications network. Having finished removing items, the user proceeds to a POS terminal 20. At the POS terminal the RFID card may be read to ascertain the items removed, or the user may simply review a list of items to ensure that they are not being mischarged for purchases. As this point a credit card or other electronic payment means may be presented to the POS terminal for payment. Upon payment, the user or purchaser's name and other information may be collected for the creation of an account and to begin storing in the database 15 information about the purchasing habits, etc. for that individual.

At the conclusion of these steps, at step 628 any further data related to the transactions, the presenter of the authorization code, their purchases, advertisements displayed, enticements received or acted on may be stored in the database 15. At this point the transactions for that individual are completed. However, processing of the data stored in the database 15 may continue as more and more data is collected for the individual and for similarly situated or similarly acting individuals, as such reveals more and more mechanisms for reaching specific individuals and methodologies that are successful to reaching specifically situated individuals.

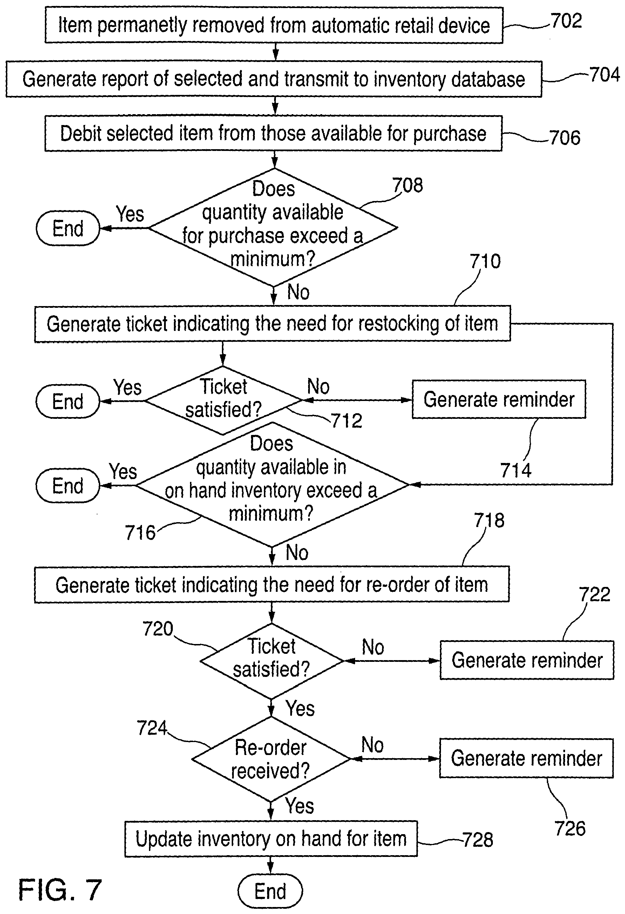

The foregoing description of a method associated with Figs. 1 and 6 is primarily focused on the customer side of the retail process. However, these actions by a customer selecting items also trigger events on the inventory management and supply side of a retail establishment. Fig. 7 describes an exemplary inventory management system useable with an automatic retail device 18 and system 10.

At step 702 it is determined that an item has been permanently removed from an automatic retail device 18. Once this is determined, at step 704 the automatic retail device 18 can generate a report or send sufficient signals to the server 13 to generate a report that an item has been permanently removed from the automatic retail device 18. With this report in step 706 the inventory management system 14 can debit the item (or multiple items) from the quantity known to be available within the automatic retail device 18. At step 708 an inquiry is made as to whether the remaining quantity of the selected item(s) in the automatic retail device 18 exceeds a predetermined minimum value. If the remaining quantity of an item exceeds the minimum the method ends. If the number is below the minimum, at step 710 a ticket is generated and sent to the management of the system 10 indicating that the automatic retail device 18 requires restocking. At a set interval an inquiry can be made of the automatic retail device 18 of whether the ticket has been satisfied as shown at step 712. If not, a reminder can be generated at step 714 and sent to the management of the system 10. This loop can continue until the ticket is satisfied at step 712 and this portion of the inventory management chain ends.

Returning to step 710, following the generation of the ticket for the restocking of the automatic retail device 18, the inventory management system 14 at step 716 may cascade into an inquiry of whether there is sufficient inventory on hand of the selected item (e.g., on the smart shelves 16) to satisfy the restocking request. Again if yes the inquiry ends, however, if there is insufficient inventory a ticket is generated indicating the need to re-order a quantity of the item at step 718. The exact value (i.e., number of items) may vary from product to product and from location to location. In some instances the quantity minimum may be quite high where the automatic retail device 18 sells the particular item in great quantities, or is in a particularly high traffic area. In other instances, where an item has regular but lower volume sales there is less risk of running out and the quantity minimum can be lower, thus reducing the likelihood of having more inventory than necessary at a particular location. Those skilled in the art will readily recognize that by having detailed data on what items sell and at what intervals a streamlined inventory system can be generated not just for a specific retail location, but product by product for that location, even in some instances down to the time during the day where demand for an item is high so that inventory can be adequately anticipated and the customers can be assured of finding the desired products available.

As with the restocking ticket in step 710, an inquiry can be made at step 720 to determine whether the re-order ticket has been satisfied (e.g., if the re-order has been placed). If the re-order has been placed then the ticket is satisfied and the re-order loop ends and the method proceeds to step 724 to determine if the re-order has been received. If however, the re-order has not been placed a reminder can be generated at set intervals in step 722, and this process can loop until the re-order is placed, satisfying the ticket in step 720. In some instances, depending on the level of integration with the manufacturers, suppliers, or distributors of a product, this re-order may be automatically generated and sent to either the manufacturer, supplier, or distributor for re-supplying the inventory of an item at a specific location.

As with step 720, the re-order received step 724 can have an interval at which reminders are sent indicating that the re-order has not been received. Once the re-order is received, at step 728, the inventory on hand can be updated. By use of the smart pallets 12, described above, once the items on the smart pallet 12 enters the retail location, its contents can be identified and added to the inventory on hand by the inventory management system 14. As described above, movement of the items within the retail location (e.g., from smart pallet 12, to smart shelves 16, to automatic retail device 18) can be monitored through each movement. The process described here with respect to Fig. 7 may be performed upon each removal of an item, or removal of items may be stored in memory and a daily or weekly or some other interval of resolution can be undertaken. As with other aspects of the system 10 this can be driven by the sales data such that inventory management for a particular product, in a particular automatic retail device 18, at a particular location, in a particular region of the world can have a customized inventory management plan in the inventory management system 14.

As will be appreciated by those of skill in the art, new products will have to be added to the inventory management system 14 from time to time. This may be performed through a user interface where item description, cost, location for addition, and ID of the automatic retail device 18 is entered. Once entered the process of Fig. 7 can be followed to ensure that the product is ordered and stocked into the specific automatic retail device 18. This may be performed largely without human interaction other than the updating of what will be sold in the automatic retail device 18 and the movement of inventory once received (e.g., from smart pallet 12 to smart shelves 16 to automatic retail device 18).

Although embodiments have been described in detail with reference to the accompanying drawings for the purpose of illustration and description, it is to be understood that the inventive processes and apparatus are not to be construed as limited thereby. It will be apparent to those of ordinary skill in the art that various modifications to the foregoing embodiments may be made without departing from the scope of the disclosure.

## Claims

1. An automatic retail device comprising:
a securable door limiting access to an interior space of the automatic retail device;
a weight sensitive shelf, configured to detect movement of an item to and from the weight sensitive shelf;
a camera associated with the automatic retail device;
a display for presenting a media presentation;
an authorization code reader, operably connected to the securable door and configured to receive an authorization code from a presenter; and
a computer, including a processor and a memory and in communication with a server, the computer receiving from the server an association of the authorization code read by the authorization code reader, the presenter of the authorization code, and a media presentation, wherein upon receipt of the association, the securable door is permitted to open and the processor causes the display to present the media presentation associated with the presenter of the authorization code.

2. The automatic retail device of claim 1, wherein the authorization code identifies the presenter as a customer with an account for the purchase of goods.

3. The automatic retail device of claim 1, wherein the authorization code identifies the presenter as an employee authorized to perform inventory management tasks.

4. The automatic retail device of claim 1, wherein the computer receives the media presentation associated with the presenter of the authorization code from the server.

5. The automatic retail device of claim 1, wherein the computer receives from the server detailed information about the presenter of the authorization code.

6. The automatic retail device of claim 1, wherein the memory stores therein a location of items in the automatic retail device such that detection of movement of an item to or from the weight sensitive shelf identifies the item being moved.

7. The automatic retail device of claim 6, wherein the processor causes the display to present a predetermined media presentation to the presenter of the authorization code upon detection of movement of an item to or from the weight sensitive shelf.

8. The automatic retail device of claim 5, further comprising a software application stored on the memory for dynamically generating media for presentation on the display.

9. The automatic retail device of claim 8, wherein the software application compares information about the presenter of the authorization code to the items available in the automatic retail device or the purchasing history of the presenter of the authorization code.

10. The automatic retail device of claim 9, wherein the dynamically generated media is an enticement to try an alternative product from that typically purchased by the presenter of the authorization code.

11. The automatic retail device of claim 9, wherein the dynamically generated media includes a customer loyalty incentive from a manufacturer.

12. The automatic retail device of claim 9, wherein the dynamically generated media includes a customer loyalty incentive from an operator of the automatic retail device.

13. The automatic retail device of claim 8, wherein the software application causes the processor to transmit data associated with the presenter of the authorization code regarding the media displayed and the identity of a purchased item to the server.

14. The automatic retail device of claim 1, further comprising a software application which upon permitting access to an automatic retail device queries the server to determine te whether an image of the presenter is stored therein.

15. The automatic retail device of claim 14, wherein if no image is stored, the software application instructs the camera to capture an image of the presenter of the authorization code.

16. The automatic retail device of claim 15, wherein the software application is configured to cause the processor to transmit the image of the presenter of the authorization code to the server for storing thereon.

17. An automatic retail device comprising:
a securable door limiting access to an interior space of the automatic retail device;
a weight sensitive shelf configured to detect movement of an item to and from the weight sensitive shelf;
a camera associated with the automatic retail device;
a display for presenting a media presentation;
an authorization code reader, operably connected to the securable door and configured to receive an authorization code from a presenter; and
a computer, including a processor and a memory and in communication with a server, the computer receiving from the server an association of the authorization code read by the authorization code reader and the presenter of the authorization code, and detailed information about the presenter of the authorization code, wherein upon receipt of the association, the securable door is permitted to open and the processor causes the display to present a media presentation; and
a software application stored on the memory for dynamically generating a media presentation for presentation on the display based on the detailed information about the presenter of the authorization code.
